# EUROPÄISCHE PATENTSCHRIFT

(11) **EP 1 621 951 B1**
(45) Veröffentlichungstag und Bekanntmachung des Hinweises auf die Patenterteilung: **29.10.2008**
(21) Anmeldenummer: 05015496.2
(22) Anmeldetag: 16.07.2005
(51) Int. Cl.: G05D 23/13

(54) **Mischventil mit Stellvorrichtung**
Mixing valve with actuating device
Mitigeur avec dispositif d'actionnement

(30) Priorität: 26.07.2004 DE 102004036182
(43) Veröffentlichungstag der Anmeldung: 01.02.2006
(73) Patentinhaber: Grohe AG, 58675 Hemer (DE)
(72) Erfinder: Frankholz, Christian, 58730 Fröndenberg (DE); Huck, Kai, 58300 Wetter (DE)

(56) Entgegenhaltungen:
- WO-A-20/04042488
- DE-U1- 7 713 834
- US-A1- 2004 000 594

## Beschreibung

Die Erfindung betrifft ein thermostatgeregeltes Mischventil für Kalt- und Heißwasser mit einer Sollwerteinstellvorrichtung für die Mischwassertemperatur, wobei eine drehbar auf einem feststehenden Halsstück am Ventilgehäuse angeordnete, auf eine Ventilstange einwirkende Stellmutter vorgesehen ist, die von einer drehfest angeordneten Hülse axial gehalten ist.

Ein derartiges Mischventil ist aus der deutschen Offenlegungsschrift DE 101 53 988 A1 bekannt.

Weitere Mischventil, bei denen die Stellmutter von einem Ventilkopfstück axial gehalten wird, das auch das Ventilkartuschengehäuse in einer Aufnahmebohrung des Ventilgehäuses haltet und das von einer Ringschraube fixierbar ist, sind aus den Druckschriften US 2004/0000594 A1 und DE 77 13 834 U1 bekannt.

Der Erfindung liegt die Aufgabe zugrunde, das im Oberbegriff des Anspruchs 1 angegebene Mischventil zu verbessern und insbesondere so auszubilden, dass das Halsstück weitgehend von bei der Montage im Ventilgehäuse auftretenden Kräften sowie von den mit einem Drehgriff erzeugbaren Anschlagkräften entlastet wird.

Diese Aufgabe wird erfindungsgemäß bei dem im Oberbegriff des Anspruchs 1 angegebenen Mischventil dadurch gelöst, dass von der Hülse auch das Halsstück in einer Aufnahmebohrung des Ventilgehäuses gehalten ist, wobei die Hülse in der Stecklage in der Aufnahmebohrung von einer oder mehreren Schrauben fixierbar ist.
Weiter Ausgestaltungen der Erfindung sind in den Ansprüchen 2 bis 15 angegeben.

Die mit der Erfindung erzielbaren Vorteile bestehen insbesondere darin, dass von der erfindungsgemäßen Hülse alle wesentlichen von außen auf das Halsstück einwirkenden Kräfte direkt aufgenommen und an das Ventilgehäuse abgegeben werden. Dadurch wird es ermöglicht, dass das Halsstück zusammen mit einem Ventilkartuschengehäuse kostengünstig aus Kunststoff im Spritzgießverfahren hergestellt werden kann.

In weiterer Ausgestaltung der Erfindung kann die Hülse zweckmäßig von einer die Hülse umfassenden Ringschraube in dem Ventilgehäuse gehalten werden, wobei die Ringschraube in ein Gewinde in der Aufnahmebohrung im Ventilgehäuse eingedreht werden kann. Die Hülse liegt hierbei vorteilhaft mit einem Flansch an einer Ringschulter in der Aufnahmebohrung des Ventilgehäuses an und fasst in der Stecklage mit einer radial vorstehenden Nase in eine entsprechende Ausnehmung im Ventilgehäuse zur Drehsicherung ein.
Zweckmäßig wird die Hülse und die Ringschraube aus Metall hergestellt.

Alternativ zur Ringschraube kann beispielsweise auch vorgesehen werden, dass mit einer oder mehreren Radialschrauben im Ventilgehäuse die Fixierung der Hülse in die Stecklage bewirkt wird.

In einer vorteilhaften Ausgestaltung der Erfindung ist die Hülse drehfest und axial festliegend auf dem Halsstück angeordnet, so dass das Halsstück mit dem Ventilkartuschengehäuse von der Hülse in der Stecklage in der Aufnahmebohrung sowohl drehfest als auch axial gehalten ist. Zweckmäßig wird hierbei die Hülse an dem Halsstück bajonettverschlussartig fixiert. Hierzu kann die Hülse mit einem innenliegenden Flanschbereich mit Ausnehmungen für am Halsstück radial vorstehenden Knaggen versehen sein, wobei eine umlaufende Ringnut im Halsstück vorgesehen ist, in der in der Stecklage die Hülse zum Halsstück verdreht wird und dadurch eine formschlüssige axiale Verbindung zwischen dem Halsstück und der Hülse hergestellt wird. Zur drehfesten Verbindung der Hülse auf dem Halsstück kann zweckmäßig am Mantelbereich der Hülse eine Ausnehmung für ein radial einschiebbares Riegelstück vorgesehen sein. Das Riegelstück umfasst in der Riegelposition mit einem Schlitz eine Knagge und verriegelt dadurch die Drehposition der Hülse zum Halsstück. Zweckmäßig sind an dem Riegelstück federnde Zungen vorgesehen, die das Riegelstück in der Stecklage in der Hülse und zum Halsstück verrasten.

Ein Ausführungsbeispiel der Erfindung ist in der Zeichnung dargestellt und wird im folgenden näher beschrieben. Es zeigt in der Zeichnung
- Figur 1: ein zum Teil dargestelltes thermostatgeregeltes Mischventil in der Schnittebene I der Figur 2;
- Figur 2: das in Figur 1 gezeigte Mischventil in der Schnittebene II;

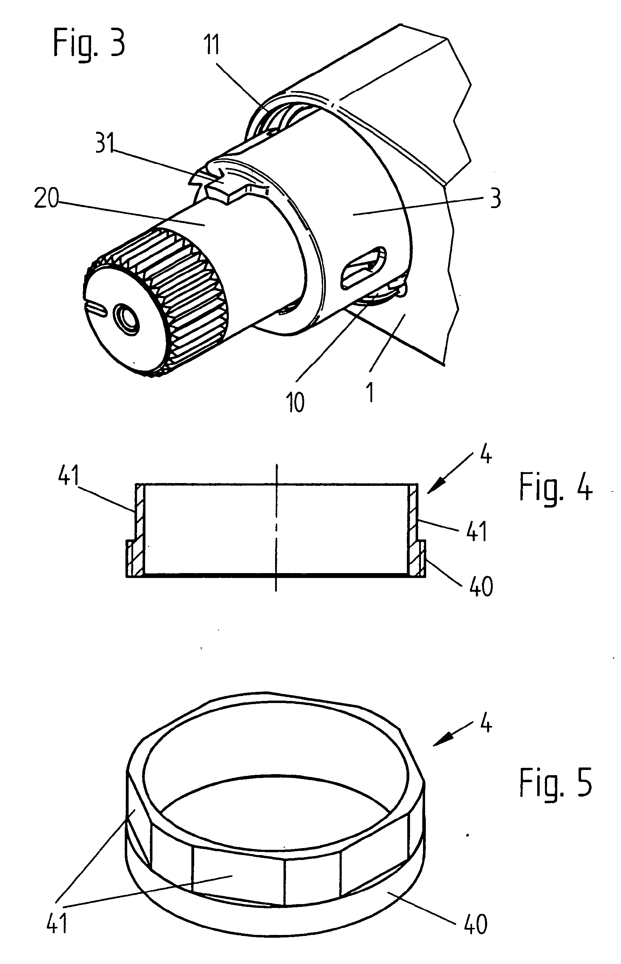

- Figur 3: den in Figur 1 gezeigten Teil des Mischventils in Perspektivansicht mit abgezogenem Griffstück und Ringschraube;
- Figur 4: die in Figur 1 gezeigte Ringschraube in vergrößerter Darstellung;
- Figur 5: die in Figur 4 gezeigte Ringschraube in Perspektivansicht;
- Figur 6: die in Figur 1 gezeigte Hülse in Perspektivansicht;
- Figur 7: die in Figur 6 gezeigte Hülse in der Schnittebenen VII;
- Figur 8: das in Figur 1 gezeigte Riegelstück in Perspektivansicht;
- Figur 9: das in Figur 8 gezeigte Riegelstück in der Schnittebene IX.

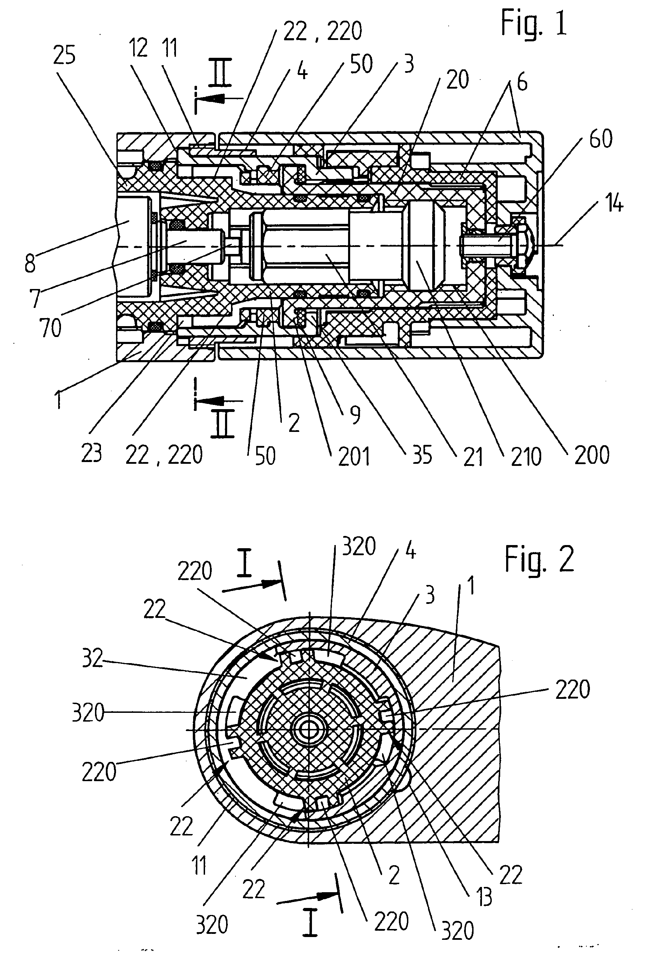

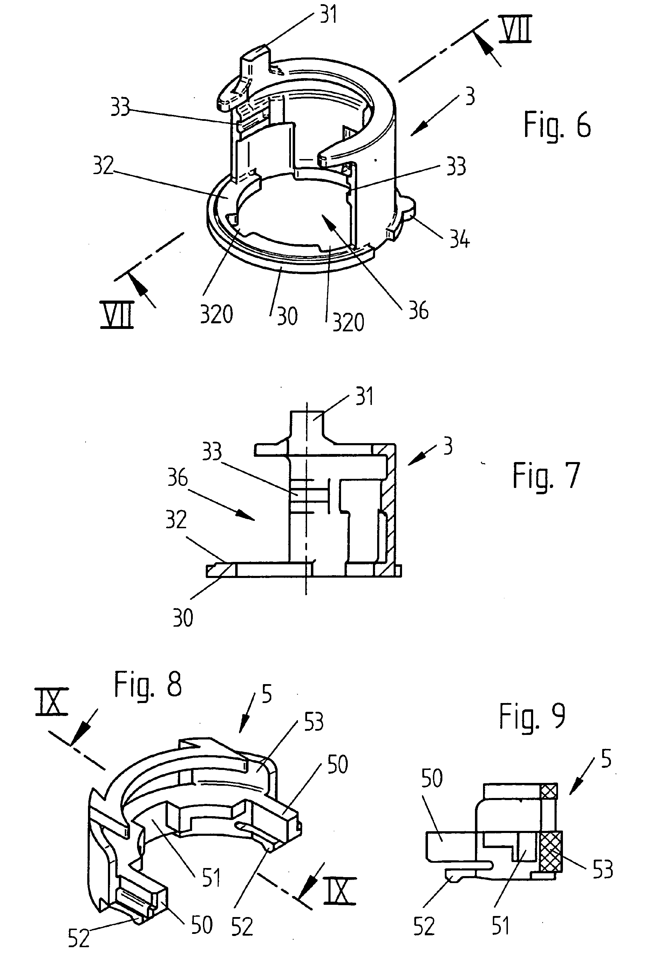

In der Zeichnung ist ein zum Teil dargestelltes thermostatgeregeltes Mischventil gezeigt. In einem zum Teil dargestellten Ventilgehäuse 1 ist in einer Aufnahmebohrung 10 ein Halsstück 2 einer thermostatgeregelten Mischventilkartusche angeordnet. Das Halsstück 2 ist Teil eines einstückig aus Kunststoff im Spritzgießverfahren hergestellten Ventilkartuschengehäuses 25. In dem Ventilkartuschengehäuse 25 ist ein Thermostatelement 7 angeordnet, das einerseits mit einem Stößel 70 an einer Ventilstange 21 anliegt und andererseits einen Ventilschieber 8 für die Regelung des Zuflusses von Kalt- und Heißwasser trägt. Das Ventilkartuschengehäuse 25, das Thermostatelement 7 und der Ventilschieber 8 sind in der Zeichnung nur zum Teil dargestellt.
Koaxial zur Mittelachse 14 des Halsstücks 2 ist die Ventilstange 21 aus dem Halsstück 2 herausgeführt. An dem vorstehenden Teil der Ventilstange 21 ist ein Kopfstück 210 mit Außengewinde vorgesehen, dass in ein entsprechendes Innengewinde 200 einer Stellmutter 20 eingreift. Die Stellmutter 20 ist in bekannter Weise auf einem zylindrischen Außenmantel des Halsstückes 2 unter Zwischenlage von Reibringen drehbar gelagert. Zur Axiallagerung weist die Stellmutter 20 einen Außenflansch 201 auf. Der Außenflansch 201 fasst unter Zwischenlage eines Gleitringes 9 hinter einen an einer metallenen Hülse 3 ausgebildeten Lagerflansch 35, so dass die Stellmutter 20 drehbar aber axial festliegend gehalten ist.
Die Hülse 3 ist am gegenüberliegenden Ende mit einem Flansch 30 versehen, der an einer Ringschulter 12 in der Aufnahmebohrung 10 im Ventilgehäuse 1 anliegt und von einer Ringschraube 4 in der Stecklage gesichert ist. Die Ringschraube 4 ist ebenfalls aus Metall hergestellt und trägt am Außenmantel ein Außengewinde 40, mit dem die Ringschraube 4 in ein Gewinde 11 in der Aufnahmebohrung 10 eindrehbar ist, wobei die vordere Stirnseite der Ringschraube 4 an dem Flansch 30 zur Anlage gelangt. Im Außenmantel der Ringschraube 4 sind außerdem Schlüsselflächen 41 für den Ansatz eines Drehwerkzeuges eingelassen. Am Flansch 30 der Hülse 3 ist außerdem eine radial vorstehende Nase 34 ausgebildet, die in eine Ausnehmung 13 in der Wandung der Aufnahmebohrung 10 des ventilgehäuses 1 einfasst und eine Drehsicherung der Hülse 3 zum Ventilgehäuse 1 bildet.
Auf dem Außenmantel der Stellmutter 20 ist außerdem ein Drehgriff 6 drehfest angeordnet. Zur Axialsicherung ist der Drehgriff 6 mit einer auf der Mittelachse 14 angeordneten Schraube 60 mit der Stellmutter 20 verbunden, wobei an der topfartigen Stellmutter 20 in der Stirnseite ein entsprechendes Gewinde ausgebildet ist.
Die metallene Hülse 3, wie sie insbesondere aus Figur 6 und 7 der Zeichnung zu entnehmen ist, trägt zum Flansch 30 einen Innenflansch 32, in dem symmetrisch angeordnete vier Ausnehmungen 320 ausgebildet sind. Entsprechend zu den Ausnehmungen 320 sind am Außenmantel des Halsstückes 2 radial vorstehende Knaggen 22 angeformt, die jeweils mit einem Längsschlitz 220 versehen sind, wie es insbesondere aus Figur 2 der Zeichnung zu entnehmen ist. Die Knaggen 22 sind durch eine umlaufende Ringnut 23 zu dem Ventilkartuschengehäuse 25 beabstandet. Die Ringnut 23 hat eine Breite, die der Breite des Innenflansches 32 entspricht, so dass die Hülse 3 mit den Ausnehmungen 320 axial über die Knaggen 22 geschoben werden kann bis der Innenflansch 32 sich im Bereich der Ringnut 23 befindet. In dieser Position kann die Hülse 3 zum Halsstück 2 bajonettverschlussartig verdreht werden, so dass der Innenflansch 32 mit seinen Stirnseiten einerseits an der Stirnseite des Ventilkartuschengehäuses 25 und andererseits an der Stirnseite der Knaggen 22 anliegt. Die Hülse 3 ist somit axial formschlüssig mit dem Halsstück 2 verbunden.
In dieser Drehstellung der Hülse 3 kann radial in eine im Mantelbereich vorgesehene Ausnehmung 36 ein Riegelstück 5 eingeschoben werden. Das Riegelstück 5 hat, wie es insbesondere aus Figur 8 und 9 der Zeichnung zu entnehmen ist, ein Ringsegment 53, an dem stirnseitig zwei mit Abstand zueinander angeordnete parallele Führungsstücke 50 angeformt sind. Im Ringsegment 23 ist außerdem symmetrisch zu den beiden Führungsstücken 50 ein Schlitz 51 ausgebildet, der den Abmessungen einer Knagge 22 entspricht. In der Hülse 3 ist zu den beiden Führungsstücken 50 jeweils eine entsprechende Führung 33 ausgebildet. Beim radialen Einschieben des Riegelstückes 5 gelangt somit eine Knagge 22 in den Schlitz 51, während die Führungsstücke 50 in die Führungen 33 einfassen, so dass die Drehstellung der Hülse 3 zum Halsstück 2 verriegelt ist.
Damit das Riegelstück 5 in der Stecklage in der Hülse 3 gehalten ist, sind parallel zu den beiden Führungsstücken 50 federnde Zungen 52 vorgesehen, die in der Stecklage stirnseitig jeweils in einen Längsschlitz 220 zweier gegenüberliegender Knaggen 22 einfassen.

Mit einer Drehbewegung des Drehgriffes 6 wird somit die Stellmutter 20 entsprechend bewegt. Das Innengewinde 200 erzeugt somit mit Hilfe des am Kopfstück 210 ausgebildeten Außengewindes eine Axialbewegung der Ventilstange 21, da die Ventilstange 21 drehfest aber axial beweglich im Halsstück 2 geführt ist. Zur Begrenzung der Drehbewegung des Drehgriffes 6 ist an der Hülse 3 eine Anschlagnase 31 ausgebildet.
Von der metallenen Hülse 3 wird somit einerseits die Stellmutter 20 axial gehalten und andererseits das zusammen mit dem Ventilkartuschengehäuse 25 aus Kunststoff ausgebildete Halsstück 2 drehfest und axial festliegend zum Ventilgehäuse 1 gesichert. Das in bekannter Weise von einer Rückstellfeder - in der Zeichnung nicht dargestellt - gegen die Ventilstange 21 gedrückte Thermostatelement 7 kann somit durch eine Drehbewegung des Drehgriffes 6 über die Stellmutter 20 und der Ventilstange 21 in die jeweils erforderliche Axialposition bzw. in die Mischwassertemperatursollwertposition gebracht werden. Beim Wassermischvorgang wird dann von dem temperaturempfindlichen Bereich des Thermostatelementes 7 die Mischwassertemperatur erfühlt, wobei bei erfühlten Temperaturänderungen ein im Thermostatelement 7 angeordneter Dehnstoff eine entsprechend zu der Temperaturänderung erfolgende Volumenänderung erfährt und eine axiale Auslenkung des Stößels 70 erzeugt, so dass die Mischwasseristtemperatur der Sollwerttemperatur wieder angenähert wird.

## Patentansprüche

1. Thermostatgeregeltes Mischventil für Kalt- und Heißwasser mit
- einer Sollwerteinstellvorrichtung für die Mischwassertemperatur, mit
- - einer Stellmutter (20),
- - - die drehbar auf einem feststehenden Halsstück (2) eines Ventilkartuschengehäuses (25) angeordnet ist,
- - - die auf eine Ventilstange (21) einwirkt, und
- - - von einer drehfest am Ventilgehäuse (1)angeordneten Hülse (3) axial gehalten ist,
**dadurch gekennzeichnet, dass**
von der Hülse (3) auch das Halsstück (2) in einer Aufnahmebohrung (10) des Ventilgehäuses (1) gehalten ist,
- wobei die Hülse (3) formschlüssig mit dem Halsstück (2) verbunden und
- in der Stecklage in der Aufnahmebohrung (10) von einer oder mehreren Schrauben fixierbar ist.

2. Mischventil nach Anspruch 1, **dadurch gekennzeichnet, dass** als Schraube eine Ringschraube (4) vorgesehen ist, die mit ihrem Außengewinde (40) in ein in der Wandung der Aufnahmebohrung (10) vorgesehenes Gewinde (11) eindrehbar ist.

3. Mischventil nach Anspruch 1 oder 2, **dadurch gekennzeichnet, dass** in der Aufnahmebohrung (10) im Ventilgehäuse (1) eine Ringschulter (12) ausgebildet ist, an der in Stecklage die Hülse (3) mit einem Flansch (30) anliegt.

4. Mischventil nach den Ansprüchen 2 and 3, **dadurch gekennzeichnet, dass** der Flansch (30) der Hülse (3) mittels der Ringschraube (4) gegen die Ringschulter (12) gedrückt wird.

5. Mischventil nach wenigstens einem der vorhergehenden Ansprüche, **dadurch gekennzeichnet, dass** die Hülse (3) eine Anschlagnase (31) oder mehrere Anschlagnasen für einen an der Stellmutter (20) angeordneten Drehgriff (6) trägt.

6. Mischventil nach wenigstens einem der vorhergehenden Ansprüche, **dadurch gekennzeichnet, dass** die Hülse (3) aus Metall hergestellt ist.

7. Mischventil nach wenigstens einem der vorhergehenden Ansprüche, **dadurch gekennzeichnet, dass** die Ringschraube (4) aus Metall hergestellt ist.

8. Mischventil nach wenigstens einem der vorhergehenden Ansprüche, **dadurch gekennzeichnet, dass** das Halsstück (2) aus Kunststoff hergestellt ist.

9. Mischventil nach wenigstens einem der vorhergehenden Ansprüche, **dadurch gekennzeichnet, dass** die Hülse (3) drehfest und axial festliegend mit dem Halsstück (2) verbunden ist.

10. Mischventil nach Anspruch 9, **dadurch gekennzeichnet, dass** am Halsstück (2) radial vorstehende Knaggen (22) ausgebildet sind, während an der Hülse (3) ein Innenflansch (32) mit Ausnehmungen (320) für die Knaggen (22) angeformt ist, derart, dass die Hülse (3) über die Knaggen (22) des Halsstückes (2) streifbar und anschließend durch eine Drehbewegung mit den Bereichen des Innenflansches (32) hinter die Knaggen (22) im Bereich einer Ringnut (23) fasst, wobei Mittel zur Sicherung der Drehstellung der Hülse (3) zum Halsstück (2) vorgesehen sind.

11. Mischventil nach Anspruch 10, **dadurch gekennzeichnet, dass** als Mittel zur Sicherung ein Riegelstück (5) vorgesehen ist, dass radial in eine im Mantelbereich der Hülse (3) ausgebildete Ausnehmung (36) einschiebbar ist, wobei das Riegelstück (5) zwei parallel vorstehende Führungsstücke (50) trägt, die in der Stecklage in entsprechende Führungen (33) in der Hülse (3) einfassen, während am Innenmantel des Riegelstückes (5) ein Schlitz (51) für die Aufnahme einer Knagge (22) am Halsstück (2) vorgesehen ist.

12. Mischventil nach Anspruch 11, **dadurch gekennzeichnet, dass** vier symmetrisch am Außenmantel des Halsstückes (2) angeformte Knaggen (22) mit jeweils einem Längsschlitz (220) vorgesehen sind, wobei am Riegelstück (5) zwei federnde Zungen (52) vorgesehen sind, die in der Steckposition des Riegelstückes (5) zur Verrastung von einer Stirnseite aus in jeweils einen Längsschlitz (220) einfassen.

13. Mischventil nach Anspruch 11 oder 12, **dadurch gekennzeichnet, dass** das Riegelstück (5) einstückig aus Kunststoff hergestellt ist.

14. Mischventil nach wenigstens einem der Ansprüche 11 bis 13, **dadurch gekennzeichnet, dass** das Riegelstück (5) mit einem Ringsegment (53) versehen ist, mit dem in der Stecklage die Ausnehmung (36) in der Hülse (3) ausgefüllt ist.

15. Mischventil nach wenigstens einem der Ansprüche 3 bis 14, **dadurch gekennzeichnet, dass** an dem Flansch (30) der Hülse (3) wenigstens eine radial vorstehende Nase (34) angeformt ist, die in der Stecklage in eine entsprechende Ausnehmung (13) im Ventilgehäuse (1) einfasst.

## Claims

1. Thermostatically controlled mixer valve for cold and hot water, having
- a desired value setting device for the mixed water temperature, having
- - an adjusting nut (20),
- - - which is arranged so as to be rotatable on a stationary neck member (2) of a valve cartridge housing (25),
- - - which adjusting nut acts on a valve stem (21) and
- - - is held axially by a sleeve (3) which is rotationally fixed on the valve housing (1),
**characterized in that**
the sleeve (2) also holds the neck member (2) in a receiving bore (10) in the valve housing (1),
- the sleeve (3) being interlockingly connected to the neck member (2) and
- in the inserted position, being fixable in the receiving bore (10) by one or more screws.

2. Mixer valve according to claim 1, **characterized in that** there is provided a threaded ring (4), serving as a screw, which can be screwed by its external thread (40) into a thread (11) provided in the wall of the receiving bore (10).

3. Mixer valve according to claim 1 or 2, **characterized in that** in the receiving bore (10) in the valve housing (1) there is formed an annular shoulder (12) against which the sleeve (3) rests in the inserted position by means of a flange (30).

4. Mixer valve according to claims 2 and 3, **characterized in that** the flange (30) of the sleeve (3) is pressed against the annular shoulder (12) by means of the threaded ring (4).

5. Mixer valve according to at least one of the preceding claims, **characterized in that** the sleeve (3) has a stop lug (31) or a plurality of stop lugs for a rotatable control member (6) arranged on the adjusting nut (20).

6. Mixer valve according to at least one of the preceding claims, **characterized in that** the sleeve (3) is made of metal.

7. Mixer valve according to at least one of the preceding claims, **characterized in that** the threaded ring (4) is made of metal.

8. Mixer valve according to at least one of the preceding claims, **characterized in that** the neck member (2) is made of plastics material.

9. Mixer valve according to at least one of the preceding claims, **characterized in that** the sleeve (3) is connected to the neck member (2) so as to be secured axially and against relative rotation.

10. Mixer valve according to claim 9, **characterized in that** radially projecting carriers (22) are formed on the neck member (2), while on the sleeve (3) an internal flange (32) having recesses (320) for the carriers (22) is formed in such a way that the sleeve (3) can be slipped over the carriers (22) of the neck member (2) and then, by means of a rotary movement, with the regions of the internal flange (32) engages behind the carriers (22) in the region of an annular groove (23), there being provided means for securing the rotated position of the sleeve (3) relative to the neck member (2).

11. Mixer valve according to claim 10, **characterized in that** as securing means there is provided a locking member (5) which is insertable radially into a recess (36) formed in the wall region of the sleeve (3), the locking member (5) having two guide members (50) projecting in parallel which, in the inserted position, engage in corresponding guides (33) in the sleeve (3), while on the inner wall of the locking member (5) there is provided a slot (51) for receiving a carrier (22) on the neck member (2).

12. Mixer valve according to claim 11, **characterized in that** four carriers (22) formed symmetrically on the outer wall of the neck member (2) are provided, each of which carriers has a longitudinal slot (220), there being provided on the locking member (5) two resilient tongues (52) which, in the inserted position of the locking member (5), each engages, from one end, in a longitudinal slot (220) for the purpose of locking.

13. Mixer valve according to claim 11 or 12, **characterized in that** the locking member (5) is formed in one piece from plastics material.

14. Mixer valve according to at least one of claims 11 to 13, **characterized in that** the locking member (5) is provided with a ring segment (53) which, in the inserted position, fills the recess (36) in the sleeve (3).

15. Mixer valve according to at least one of claims 3 to 14, **characterized in that** on the flange (30) of the sleeve (3) there is formed at least one radially projecting lug (34) which, in the inserted position, engages in a corresponding recess (13) in the valve housing (1).

## Revendications

1. Mitigeur à régulation thermostatique pour d'eau chaude et de l'eau froide comprenant :
- un dispositif de réglage d'une valeur de consigne de la température de l'eau mélangée ayant,
- un écrou de réglage (20),
- installé de manière rotative sur une pièce de col (2) fixe d'un boîtier de cartouche de vanne (25),
- qui agit sur une tige de soupape (21), et
- qui est tenu axialement par un manchon (3) installé solidairement en rotation sur le boîtier de mitigeur (1),
**caractérisé en ce que**
la pièce de col (2) du manchon (3) est également tenue dans un perçage de réception (10) du boîtier de mitigeur (1),
- le manchon (3) est relié à la pièce de col (2) par une liaison par la forme, et
- en position enfichée dans le perçage de réception (10), la pièce de col se bloque à l'aide d'une ou plusieurs vis.

2. Mitigeur selon la revendication 1,
**caractérisé en ce que**
la vis est une vis annulaire (4) dont le filetage extérieur (40) se visse dans un filetage (11) prévu dans la paroi du perçage de réception (10).

3. Mitigeur selon la revendication 1 ou 2,
**caractérisé en ce que**
le perçage de réception (10) du boîtier de mitigeur (1) comporte un épaulement annulaire (12) contre lequel s'appuie le manchon (3) par sa bride (30) en position engagée.

4. Mitigeur selon les revendications 2 et 3,
**caractérisé en ce que**
la bride (30) du manchon (3) est poussée contre l'épaulement annulaire (12) par une vis annulaire (4).

5. Mitigeur selon les revendications précédentes,
**caractérisé en ce que**
le manchon (3) comporte un bec de butée (31) ou plusieurs becs de butée pour une poignée tournante (6) installée sur l'écrou de réglage (20).

6. Mitigeur selon les revendications précédentes,
**caractérisé en ce que**
le manchon (3) est en métal.

7. Mitigeur selon les revendications précédentes,
**caractérisé en ce que**
la vis annulaire (4) est en métal.

8. Mitigeur selon les revendications précédentes,
**caractérisé en ce que**
la pièce de col (2) est en matière plastique.

9. Mitigeur selon les revendications précédentes,
**caractérisé en ce que**
le manchon (3) est relié solidairement en rotation et de manière bloquée axialement à la pièce de col (2).

10. Mitigeur selon la revendication 9,
**caractérisé en ce que**
la pièce de col (2) comporte des taquets (22) venant radialement en saillie et
le manchon (3) comporte une bride intérieure (32) avec des cavités (320) pour les taquets (22) de façon que le manchon (3) puisse passer pardessus les taquets (22) de la pièce de col (2) qui ensuite, par un mouvement de rotation avec les zones de la bride intérieure (32), vient prendre derrière les taquets (22) au niveau d'une rainure annulaire (23), des moyens étant prévus pour bloquer la position de rotation du manchon (3) par rapport à la pièce de col (2).

11. Mitigeur selon la revendication 10,
**caractérisé en ce que**
les moyens pour bloquer sont constitués par une pièce en forme de verrou (5) qui se glisse radialement dans une cavité (36) réalisée dans la zone de l'enveloppe du manchon (3),
a pièce formant verrou (5) a deux éléments de guidage (50) parallèles, venant en saillie, et qui en position engagée, viennent prendre dans des guides correspondants (33) du manchon (3) alors que l'enveloppe intérieure de la pièce formant verrou (5) comporte une fente (51) pour recevoir un taquet (22) de la pièce de col (2).

12. Mitigeur selon la revendication 11,
**caractérisé par**
quatre taquets (22) symétriques, formés sur l'enveloppe extérieure de la pièce de col (2), chaque taquet ayant une fente longitudinale (220) et la pièce formant verrou (5) comporte deux languettes élastiques (52) qui s'accrochent à partir de la face frontale dans une fente longitudinale (220) respective en position enfichée de la pièce formant verrou (5).

13. Mitigeur selon la revendication 11 ou 12,
**caractérisé en ce que**
la pièce formant verrou (5) est réalisée en une seule partie en matière plastique.

14. Mitigeur selon les revendications 11 à 13,
**caractérisé en ce que**
la pièce formant verrou (5) est munie d'un segment annulaire (53) qui remplit la cavité (36) du manchon (3) en position enfichée.

15. Mitigeur selon les revendications 3 à 14,
**caractérisé en ce que**
la bride (30) du manchon (3) en position enfichée, comporte au moins un bec (34) qui vient radialement en saillie et en prise dans une cavité correspondante (13) du boîtier de mitigeur (1), en position enfichée.
